# EUROPEAN PATENT APPLICATION

(11) **EP 2 693 784 A1**
(43) Date of publication of application: **05.02.2014**
(21) Application number: 12305936.2
(22) Date of filing: 30.07.2012
(51) Int. Cl.: H04W 8/18, H04W 8/20

(54) **A method for accessing a service, corresponding first device, second device and system**

(71) Applicant: Gemalto SA, 92190 Meudon (FR)
(72) Inventor: Halle, David, 13705 LA CIOTAT (FR); Prigent, François, 13705 LA CIOTAT (FR); Dao, Frédéric, 13705 LA CIOTAT (FR); Duprez, Jérôme, 13705 LA CIOTAT (FR); Pico, Richard, 13705 LA CIOTAT (FR); Stankowski, Stephan, 13705 LA CIOTAT (FR); Gillet, Thierry, 13705 LA CIOTAT (FR)

(57) **Abstract**

The invention relates to a method 20 for accessing a service.

According to the invention, a first device 14 stores data relating to at least one first service subscription. The first device stores at least one first criterion associated with each of the at least one first service subscription. A second device 18 stores data relating to at least one second service subscription. The second device stores at least one second criterion associated with each of the at least one second service subscription. The first device compares at least one requested criterion to at least one stored first criterion. If the at least one requested criterion does not match the at least one stored first criterion, then the first device sends to a second device a request 24 for loading data relating to at least one service subscription accompanied with the at least one requested criterion. The second device compares at least one requested criterion to at least one stored second criterion. And if the at least one requested criterion does match the at least one stored second criterion, then the second device sends to the first device data 26 relating to at least one second service subscription associated with the at least one stored second criterion.

The invention relates also to corresponding first device, second device and system.

## Description

### Field of the invention:

The invention relates generally to a method for accessing a service.

Moreover, the invention pertains to a first device for accessing a service.

Furthermore, the inventions relates to a second device for accessing a service as well.

Finally, the invention also pertains to a system comprising at least the first device and the second device.

The present invention is notably applicable to a mobile radio-communication field wherein a token, like an embedded chip, such as an embedded Universal Integrated Circuit Card (or eUICC), a smart card termed Subscribed Identity Module (or SIM) type card or the like, as first device, is connected to a remote server, as second device.

### State of the art:

As known per se, a mobile (tele)phone, as user terminal, cooperates with a token, so as to identify and authenticate a subscriber to a mobile radio-communication network. To identify and authenticate the subscriber, the token provides the mobile radio-communication network with data relating to the user subscription.

Nowadays, a user tends to have more and more applications that are supported by her/his Mobile Equipment (or ME) that comprises the user terminal and the token.

However, the user does not have a subscription that satisfies one or several particular needs and/or constraints of an application, i.e. a service, which the user desires to access to.

There is a need to supply a solution that allows providing the user with another subscription(s) that satisfy(ies) one or several particular needs and/or constraints of an application.

### Summary of the invention:

The invention proposes a solution for satisfying the just herein above specified need by supplying a method for accessing a service.

According to the invention, a first device storing data relating to at least one first service subscription, the first device storing at least one first criterion associated with each of the at least one first service subscription, a second device storing data relating to at least one second service subscription, the second device storing at least one second criterion associated with each of the at least one second service subscription, the method comprises the following steps. The first device compares at least one requested criterion to at least one stored first criterion. If the at least one requested criterion does not match the at least one stored first criterion, then the first device sends to a second device a request for loading data relating to at least one service subscription accompanied with the at least one requested criterion. The second device compares at least one requested criterion to at least one stored second criterion. And if the at least one requested criterion does match the at least one stored second criterion, then the second device sends to the first device data relating to at least one second service subscription associated with the at least one stored second criterion.

The principle of the invention consists in that a (first) device analyses whether one or several requested criterions correspond to one or several registered criterions associated with an available service subscription and, if not, the device addresses to another device a demand for a service subscription(s) compliant with the requested criterion(s). The other (or second) device sends back, after analysis at its own side, another service subscription(s) that is(are) associated with the requested criterion(s).

The invention solution requires neither any user intervention nor a person who works on behalf of a service provider, so as to access other subscription data that allows satisfying one or several requested criterions.

Due to a loading of data relating to another appropriate subscription(s) that satisfies the criterion(s) that is(are) requested possibly by an application, there is no need to change or re-write the application.

This is the data relating to a second (or more) subscription(s) to be imported that allows satisfying one or several particular needs and/or constraints of a possible application to access a corresponding service.

As soon as other subscription data is loaded, the invention solution allows switching possibly, in a dynamic manner, from a subscription to another subscription.

According to a further aspect, the invention is a first device for accessing a service.

According to the invention, the first device storing data relating to at least one first service subscription, the first device storing at least one first criterion associated with each of the at least one first service subscription, the first device is adapted to:
- compare at least one requested criterion to at least one stored first criterion;
- send to a second device, if the at least one requested criterion does not match the at least one stored first criterion, a request for loading data relating to at least one service subscription accompanied with the at least one requested criterion.

The first device may be a terminal or a token.

The invention does not impose any constraint as to a kind of the token.

As removable token, it may be a SIM type card, a Secure Removable Module (or SRM), a smart dongle of the USB (acronym for "Universal Serial Bus") type, a (micro) Secure Digital (or SD) type card or a Multi-Media type Card (or MMC) or any format card to be coupled to a host device.

According to still a further aspect, the invention is a second device for accessing a service.

According to the invention, the second device storing data relating to at least one second service subscription, the second device storing at least one second criterion associated with each of the at least one second service subscription, the second device is adapted to:
- receive from a first device a request for loading data relating to at least one service subscription accompanied with at least one requested criterion;
- compare the at least one requested criterion to at least one stored second criterion; and
- send to the first device, if the at least one requested criterion does match the at least one stored second criterion, data relating to at least one second service subscription associated with the at least one stored second criterion.

The second device may be a terminal or a token, as local device, or a remote server or a cloud server, as remote device.

According to still an additional aspect, the invention is a system for accessing a service.

According to the invention, the system comprising at least a first device and a second device, the first device storing data relating to at least one first service subscription, the first device storing at least one first criterion associated with each of the at least one first service subscription, the first device is adapted to:
- compare at least one requested criterion to at least one stored first criterion;
- send to a second device, if the at least one requested criterion does not match the at least one stored first criterion, a request for loading data relating to at least one service subscription accompanied with the at least one requested criterion; and
- the second device storing data relating to at least one second service subscription, the second device storing at least one second criterion associated with each of the at least one second service subscription, the second device is adapted to:
- receive from the first device a request for loading data relating to at least one service subscription accompanied with at least one requested criterion;
- compare the at least one requested criterion to at least one stored second criterion; and
- send to the first device, if the at least one requested criterion does match the at least one stored second criterion, data relating to at least one second service subscription associated with the at least one stored second criterion.

### Brief description of the drawings:

Additional features and advantages of the invention will be more clearly understandable after reading a detailed description of one preferred embodiment of the invention, given as an indicative and non-limitative example, in conjunction with the following drawings:

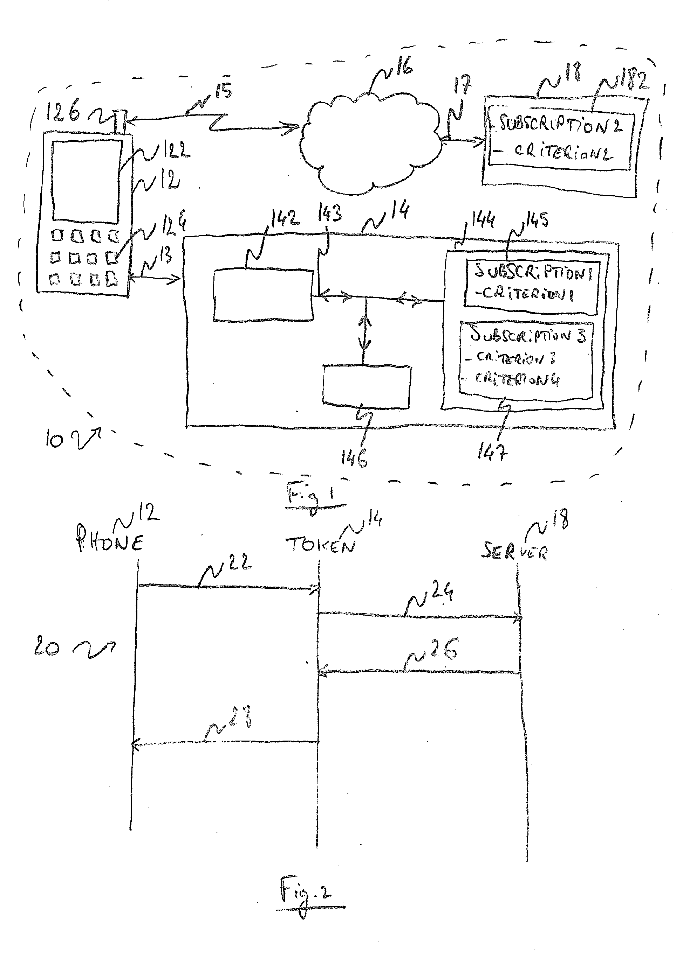

- Figure 1 illustrates a simplified diagram of one embodiment of a system for accessing a service by using a token and a remote server, so as to provision the token with data relating to a subscription(s) to a service(s) that is(are) not available at the token and originates from the server, according to the invention; and
- Figure 2 represents an example of one message flow between the token and the remote server of figure 1, so that the token submits to the server one or several requested criterions along with a request for another subscription and receives from the server data relating to another subscription to a service(s).

### Detailed description:

Herein under is considered a case in which the invention method for accessing a service is implemented by an embedded chip, as token and first device, that is soldered within a mobile phone, as host device, and a remote server, as second device.

Within the present description, a token is a smart object that is intended to communicate with the outside world. The token may be constituted by any electronic medium.

According to another embodiment, the invention method for accessing a service is implemented by a first device, as standalone entity, and a second device. In other words, the first device, like a user terminal, does not cooperate with any token, so as to access a server issuing data relating to a subscription to a service(s). According to such an embodiment (not represented), the first device is adapted to carry out the functions that are carried out by the token and the first device and that are described infra.

Naturally, the herein below described embodiment is only for exemplifying purposes and is not considered to reduce the scope of the invention.

**Figure 1** shows schematically a system 10 for accessing a service.

Such a system includes an embedded UICC 14, as first device, a remote server 18, as second device, and a mobile phone 12, as third device coupled to the first device.

For sake of simplicity, the mobile phone 12, the embedded UICC 14 and the remote server 18 are termed herein after the phone 12, the token 14 and the server 18 respectively.

It is to be noted that only one token 14 is represented for clarity reason. However, the server 18 is able to provide a fleet of tokens with data relating to one or several subscriptions to one or several services, as service subscription data. The service subscription data is not registered within the concerned token prior to its provision by the server 18. Once provisioned, the service subscription data allows accessing preferably one or several mobile radio-communication networks, as wireless services.

Instead of a phone, it may be any other device including means for processing data, comprising or being connected to wireless communication means for exchanging data with outside and comprising or being connected to means for storing data.

Within the present description, the adjective "wireless" used within the expression "wireless communication means" denotes notably that the communication means communicates via one or several long range Radio-Frequency (or RF) links.

The long range RF may be fixed at several hundreds of MHz, for instance, around 850, 900, 1800, 1900 and/or 2100 MHz.

Instead of being constituted by a phone, the host device may be, for instance, a set-up box, a desktop computer, a laptop computer, a media-player, a game console, a tablet, a netbook, a handset and/or a Personal Digital Assistance (or PDA).

Such a host device list is not exhaustive but only for exemplifying purposes.

The phone 12 is preferably used for accessing one or several mobile radio-communication networks 16.

The mobile radio-communication network(s) 16 may be constituted by a Global Service for Mobiles (or GSM), a General Packet Radio Service (or GPRS), a Universal Mobile Telecommunications System (or UMTS), a UTRAN (acronym for "UMTS Terrestrial Radio Access Network"), an EDGE (acronym for "Enhanced Data Rates for GSM Evolution"), a Code Division Multiple Access (or CDMA), a WLAN (acronym for "Wide Local Area Network") and/or a Long Term Evolution (or LTE) type network(s).

Such a mobile radio-communication network list is not exhaustive but only for exemplifying purposes.

Instead of a mobile radio-communication network(s), it may be constituted by an Internet network that is accessible, possibly via a wireless link, like a link of the Wifi or Bluetooth (registered trademark) type, through an intermediate entity, as Internet access point.

The phone 12 includes preferably a display screen 122 and a keyboard 124, as Man Machine Interface (or MMI).

Alternatively, instead of a display screen, the phone 12 is equipped with a touch sensitive display screen.

The MMI allows a phone user to interact with the phone 12.

The phone 12 comprises an antenna 126. The antenna 126 allows communicating data, through a long range RF link(s) 15, over one or several mobile radio-communication networks 16, with a server 18.

The phone 12 includes data processing means, such as one microprocessor (not represented), data storing means (not represented), as phone memory, and at least one Input/Output (or I/O) interface that are linked all together through a control and data bus (not represented).

The phone 12 plays, in a preferential manner, a role of a modulator-demodulator (or modem), so as to exchange data notably between the token 14 and the server 18.

The phone 12 carries out the following operations:
- a modulation of an analogical carrier signal to encode digital information to be transmitted, over the antenna 126, to the server 18 (and/or another entity (not represented)), and
- a demodulation of a received analogical carrier signal to decode the encoded digital information that is received, over the antenna 126, from the server 18 (and/or another entity (not represented)).

The phone memory, as first memory, may comprise one or several memories, such as a flash memory(ies) and/or a hard disk drive(s).

The phone memory stores preferably an identifier relating to the phone 12, like an International Mobile Equipment Identity (or IMEI).

The phone memory stores an Operating System (or OS) and one or several applications.

The phone 12 is preferably coupled to the token 14.

The token 14 is under control of the phone microprocessor.

Alternately, instead of being coupled to the token 14, the phone 12 stores, within its memory, data stored within the token 14 as described infra.

The phone I/O interface includes an I/O interface for exchanging data with the token 14.

According to a preferred embodiment, a token chip is soldered to a Printed Circuit Board (or PCB) of the phone 12.

Alternatively, the phone I/O interface with the token 14 may be an International Organization for Standardization (or ISO) 7816 interface, as contact interface when the token 14 is inserted within the phone 12.

Instead of a contact interface, the phone I/O interface with the token 14 includes or be connected to a contact-less interface. The phone 12 includes or is connected to means for communicating data while using preferably a short range RF link. The short range RF link may be related to any technology type that allows the phone 12 to exchange data with an external proximate device, as local (not represented) and second device (instead of the server 18 as remote device). The short range RF may be fixed at 13,56 MHz and related to a Near Field Communication (or NFC) type technology, as contact-less technology.

The token 14 is preferably associated with or tied to the server 18.

The token 14 belongs to a user, as preferably subscriber to a wireless service.

The token 14 is connected, through a bi-directional contact link 13, to the phone 12.

According to another embodiment, the token 14 is connected, through a bi-directional contact-less link, i.e. a short range RF link, to the phone 12.

The token 14 includes a chip (not represented).

The token chip includes at least one microprocessor 142, as data processing means, at least one memory 144, as data storing means, and at least one I/O interface 146 that are internally all connected, through an internal bidirectional data bus 143, to each other.

The token I/O interfaces 146 allow communicating data from the internal chip components to the chip exterior and conversely.

The token microprocessor 142 processes, controls and communicates internally data with all the other components incorporated within the chip and, through the I/O interfaces 146, with the chip exterior.

The token microprocessor 142 executes or runs one or several applications.

The token microprocessor 142 is preferably able to initiate actions, in order to interact directly with the outside world, in an independent manner of the phone 12, as host device. Such a capacity of interaction at the initiative of the token 14 is also known as proactive capacity. The token 14 is thus able to send, at its own initiative, through the phone 12, to any device connected to the phone 12 a proactive command for sending, for instance, a request for loading data relating to one service subscription accompanied with or including one or several requested criterions, to the server 18.

The token memory 144 stores preferentially data, as service subscription data, relating to one or several subscriptions to the mobile radio-communication network(s) 16, as wireless service(s).

Instead of or besides data relating to one or several subscriptions to the wireless service(s), the token memory 144 may store data relating to one or several subscriptions to a mobile TV service, a mobile payment service, a wallet service and/or other data relating to one or several subscriptions to other service(s).

Data relating to one subscription to one or several wireless services includes:
- an International Mobile Subscriber Identity (or IMSI), as subscriber and service subscription identifier for accessing the mobile radio-communication network(s) 16;
- a key Ki, as network authentication key, allowing to authenticate the concerned subscriber to the mobile radio-communication network(s) 16;
- Milenage, as authentication algorithm, allowing to authenticate the concerned subscriber to the mobile radio-communication network(s) 16;
- one or several passwords, like a Personal Identity Number (or PIN), and/or one or several cryptographic algorithm(s), as data relating to secret(s), possibly known to the subscriber and always securely stored within the token 14;
- a file system;
- one or several security keys, like a key(s) for encrypting/decrypting data and/or a key(s) for signing data a key(s),
- one or several applicative keys, like a key for accessing a user bank account through the mobile radio-communication network(s) 16 and/or a key for accessing a user bank account over a short range RF link (not represented); and/or
- one or several credentials, like a user name and/or IDentifier (or ID) of the subscriber, as data relating to the user.

The token memory 144 stores for instance two sets of service subscription data, one set of data relating to a first service subscription, as subscription 1, and another set of data relating to a third service subscription, as subscription 3.

The token memory 144 may store more than two sets of service subscription data.

Each set of service subscription data is preferably stored within its own associated specific security domain.

The first service subscription data allows accessing from the phone 12 to the mobile radio-communication network(s) 16.

The first service subscription data comprises an identifier IMSI1, as first subscriber, relating to a first service subscription.

The first service subscription data includes preferably a first key Ki1, as first network authentication key Ki1, for authenticating the subscriber to the mobile radio-communication network(s) 16 and the server 18. The first network authentication key Ki1 is associated with the first subscriber IMSI1. The first network authentication key Ki1 allows authenticating the associated first subscriber to the mobile radio-communication network(s) 16 and the server 18.

The first service subscription data is associated with one or several criterions, as first criterions. The first criterion(s) is(are) satisfied by using the first service subscription data.

The token memory 144 stores within a first security domain 145, as first memory area, the first set of data relating to a first service subscription. The first service subscription data set includes, for instance, the first service subscription data "subscription 1" and one associated first criterion "criterion 1".

The third service subscription data also allows accessing from the phone 12 to the mobile radio-communication network(s) 16.

The third service subscription data comprises an identifier IMSI3, as third subscriber, relating to a third service subscription.

The third service subscription data includes preferably a third key Ki3, as third network authentication key Ki3, for authenticating the subscriber to the mobile radio-communication network(s) 16 and the server 18. The third network authentication key Ki3 is associated with the third subscriber IMSI3. The third network authentication key Ki3 allows authenticating the associated third subscriber to the mobile radio-communication network(s) 16 and the server 18.

The third service subscription data is also associated with one or several criterions, as third criterions. The third criterions are satisfied by using the third service subscription data.

The token memory 144 stores, within a second security domain 147, as second memory area, the set of data relating to a third service subscription. The third service subscription data set includes, for instance, the third service subscription data "subscription 3" and two associated third criterions "criterion 3 and criterion 4".

As first and/or third criterion(s), it may include:
- one or several predetermined dates and times;
- one or several predetermined minimum and/or maximum threshold(s) of Quality of Service (or QoS) and/or other radio parameter(s). The QoS may be characterized by a power of a signal received by the phone antenna 126. The token 14 is able to retrieve such QoS by requesting it preferably to the phone 12;
- one or several predetermined logical channels. The logical channel(s) may comprise one voice communication channel and/or one or several data communication channels. As data communication channels, it may include an Internet Protocol (or IP) type channel, a GPRS type channel and/or any other channel the bit rate of which is higher than the one related to a voice communication channel;
- one or several identified geographic locations of the concerned subscriber;
- one or several identified cells under a radio coverage of the mobile radio-communication network(s) 16 and in which the concerned subscriber is situated; and/or
- (an)other non-technical element(s), like a predefined maximum rate(s) for communicating data, a predefined cost(s) per consumption time unit, a predefined cost(s) per data unit and/or a predefined Mobile Virtual Network Operator (or MVNO).

The token memory 144 stores preferably data relating to a Uniform Resource Identifier (or URI), a Uniform Resource Locator (or URL) and/or an Internet Protocol (or IP) address of a server 18, as identifier of the server to be addressed.

The token memory 144 stores preferably one or several Subscriber Identity Module (or SIM) type applications and possibly (an)other application(s).

The SIM type application(s) includes, among others, a SIM application for a Global Service for Mobiles (or GSM) type network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet protocol Multimedia Subsystem (or IMS) Subscriber Identity Module (or ISIM) application.

The SIM type application(s) allow(s) the phone 12 to authenticate to the mobile radio-communication network(s) 16.

To authenticate to the mobile radio-communication network(s) 16, the SIM type application(s) use(s) preferentially the first network authentication key Ki1 relating to a currently active first service subscription. The SIM type application(s) also use(s) preferably, on the one hand, data as challenge that is supplied by a server that attempts to authenticate the subscriber, and, on the other hand, an authentication algorithm, like, for instance, Milenage.

The token microprocessor 142 executes, in a preferred manner, one or several security functions.

The security functions include preferably a user authentication process to be used prior to accessing the token memory 144. To authenticate the user, the user has to provide a PIN, at least one user credential, or biometric data, as user reference data, that is securely stored within the token memory 144. As biometric data, it may include one fingerprint(s), one iris print(s), one voiceprint(s) relating to one authorized user(s).

The security functions include preferentially an encryption/decryption process to be used before sending data to outside/after receiving data from outside, so as to protect access to data managed by or through the token 14. To encrypt data to be sent, the token 14 uses an encryption key and an encryption algorithm, such as an Advanced Encryption Standard (or AES), a Data Encryption Standard (or DES) or the like, that are stored within the token memory 144. To decrypt data to be received, the token 14 may use a decryption key and a decryption algorithm, such as an AES, a DES or the like, that are stored within the token memory 144.

The security functions include preferentially a data signature process to be used prior to sending data, so as to prove an origin of data originating from the token 14. To sign data, the token 14 uses preferably a predetermined signature algorithm and a predetermined signature key Ks1 that are both stored within the token memory 144. The signature key Ks1, as private key, is related to the token 14. The interlocutor, namely the server 18 as second device, verifies corresponding signed data by using a predetermined signature verification algorithm and a predetermined signature verification key that are both stored within the interlocutor memory. The signature verification key is preferably a public key relating to the token 14 that has been deduced from the token private key. According to one embodiment, the signature key and the signature verification key constitute one and the same key, as a key shared between the token 14 and its interlocutor(s), namely the server 18 and/or another device(s).

According to one invention feature, the token chip is arranged to compare at least one requested criterion to at least one criterion, as first reference criterion, that is stored within the token 14.

The first reference criterions are for instance the first criterion "criterion 1" and the third criterions "criterion 3 and criterion 4".

The criterion(s) that is(are) to be compared to the first reference criterion(s) may be requested by an application that is supported by the phone 12, the token 14 or another local or remote device connected or coupled to the token 14.

The requested criterion(s) may contain one or several needs and/or constraints of a requesting application.

The currently active service subscription may not satisfy the requested criterion(s).

The requested criterion(s) is(are) satisfied when a corresponding service subscription(s) that exist(s) either internally, i.e. stored within the token memory 144, or externally, i.e. stored within a local or remote device, is(are) used.

The requested criterion(s) may be stored within the token memory 144, during a customization or personalization of the token 14, either for or after its issuance.

If only one criterion is requested and matches one criterion that is associated with one service subscription and stored within the token memory 144, then the token 14 deactivates a currently active service subscription and activates another resident service subscription that is associated with the corresponding criterion that is stored within the token memory 144, like another security domain, as memory area that is separate from a memory area that stores the active service subscription data.

If two or more criterions are requested and each requested criterion matches one criterion associated with one and the same service subscription that is resident within the token 14, then the token 14 deactivates a currently active service subscription and activates another resident service subscription that is associated with the corresponding criterions that are stored within the token memory 144, like another security domain, as memory area that is separate from a memory area that stores the active service subscription data.

If two or more criterions are requested and several requested criterions match, each individually, criterions associated with two or more service subscriptions that are resident within the token 14, then the token 14 selects, possibly under a user control through the MMI of the phone 12, amongst the considered service subscriptions, one service subscription that satisfies a maximum number of the requested criterions. If the user has to be involved for a service subscription selection, then the user has to enter her/his credentials, like a user name and preferentially a password (or the like), so as to identify and preferentially authenticate an authorized user prior to a selection of a service subscription.

If the requested criterion(s) do(es) not match, each individually, one criterion(s) that is(are) stored within the token 14, then the token 14 sends to the server 18 (and/or another external entity(ies)) a request for loading one or several sets of data relating to one service subscription accompanied with the requested criterion(s).

To carry out such a criterion comparison and such an internal and possibly external searching of one or several corresponding internal or external service subscription data sets, the token microprocessor 142 executes preferably an agent, as application that the token 14 supports, i.e. stores within the token memory 144.

According to another embodiment, the agent is supported by the phone 12.

According to still another embodiment, the agent is supported by the phone 12 and the token 14.

A triggering of an execution of the agent may occur further to an occurrence of a predetermined event(s). As predetermined event(s), it may include a change of country in which the phone 12 is located, a change of cell associated with a base station which the phone 12 is attached and/or a reception by the agent of one or several criterions requested by another application that is supported by an external entity or the token 14 itself.

When executed and no on-board available service subscription that satisfies the requested criterions, the agent allows sending, through the phone 12, to the server 18, a request for (down)loading data relating to one or several service subscriptions accompanied with the requested criterions.

The mobile radio-communication network(s) 16 is(are) connected, through a bi-directional wired link 17, to the server 18, as Over-The-Air (or OTA) platform and back-end server.

Instead of a wired link 17, the server 18 may be connected, through a bi-directional wireless link, to the mobile radio-communication network(s) 16.

The server 18 to be addressed is identified by a URI, like an URL, or an IP address, as server identifier. The server identifier may be stored within either the token memory 144 or a phone memory.

The server 18, as addressee of a request, originating from the token 14, for loading data relating to one or several service subscriptions along with one or several requested criterions, may be a cloud server.

The server 18 may be operated by a mobile radio-communication network operator, as Mobile Network Operator (or MNO) or Mobile Virtual Network Operator (or MVNO), a service provider or on its behalf.

The server 18 is hosted by a computer.

The server 18 is dedicated to running an application for managing a database and communicating some information of the database to outside.

Alternately, another server (not represented) that is connected to the server 18 manages the database.

The server 18 includes preferably a memory 182 that stores the database.

Instead of an internal memory, the server 18 is connected to an external memory (not represented) storing the database.

The database contains a list of one or several sets of service subscription data.

The database may contain additional data.

The additional data may include data relating to one or several keys for accessing one or several services, data relating to one or several applications, a command for erasing one or several service subscription data that is stored within a requesting device, such as the token 14.

Naturally, the additional data list that is herein above given is not exhaustive and may comprise other configuration item(s) that is(are) not listed.

The server 18 is preferably able to encrypt/decrypt data to be exchanged with the requesting device by using an encryption/decryption key(s) shared with the requesting device.

Rules for accessing a service for searching data relating to a service subscription(s) that satisfy(ies) the requested criterion(s) may be used. Rules for accessing the searching service are accessible to the server 18.

The rules for accessing the searching service may encompass a user profile(s) that is(are) eligible for accessing the service, such as a predetermined minimum age, a predefined gender and/or other kind of access condition(s), a user authentication.

The server 18 takes into account the rules for accessing the searching service, so as to forbid or authorize access to data stored at the server 18 side.

Each service subscription data set is associated with one or several criterions that are satisfied.

For sake of simplicity, the represented database registers data relating to only one service subscription "subscription 2", as second service subscription, that is associated with only one satisfied second criterion "criterion 2".

The second service subscription may be a subscription to one or several wireless services.

Data relating to one subscription to one or several wireless services may be similar to the one described previously that is stored within the token memory 144 and possibly completed by other data.

The second subscription data comprises preferably notably an identifier IMS12, as second subscriber, relating to a second service subscription.

The second service subscription data includes preferably a second key Ki2, as second network authentication key Ki2, for authenticating the subscriber to the mobile radio-communication network(s) 16 and the server 18. The second network authentication key Ki2 is associated with the second subscriber IMSI2. The second network authentication key Ki2 allows authenticating the associated second subscriber to the mobile radio-communication network(s) 16 and the server 18.

The server 18 is configured to receive a request for loading data relating to one or several service subscriptions accompanied with one or several requested criterions.

According to one invention feature, the server 18 is arranged to compare at least one requested criterion to at least one criterion, as second reference criterion, that is stored within or accessible to the server 18.

The second reference criterion is, for instance, the second criterion "criterion 2" that is stored within the server memory 182.

The criterion(s) that is(are) to be compared to the second reference criterion(s) originate(s) from a requesting local or remote device, like the token 14.

The requested criterion(s) is(are) satisfied when a corresponding service subscription(s) that is(are) within or accessible to the server 18 is(are) used.

If only one criterion is requested and matches one criterion that is stored within the server memory 182 or accessible to the server 18 and that is associated with one or several service subscriptions, then the server 18 sends to the requesting device data relating to one or several service subscriptions associated with the stored criterion.

If two or more criterions are requested and each requested criterion matches one criterion associated with one service subscription that is stored within the server memory 182 or accessible to the server 18, then the server 18 sends to the requesting device data relating to the concerned service subscription associated with the criterions that are stored at the server 18 side.

If two or more criterions are requested and several requested criterions match, each individually, corresponding criterions associated with two or more service subscriptions that are resident within or accessible to the server 18, then the server 18 sends to the requesting device data relating to the concerned service subscriptions associated with the criterions that are stored at the server 18 side.

If the requested criterion(s) do(es) not match, each individually, one criterion(s) that is(are) stored at the server 18 side, then the server 18 sends to the requesting device a message, as response to the service subscription loading request, for apprising of an absence of any service subscription compliant with the requested criterion(s).

Figure 2 depicts an exemplary embodiment of a message flow 20 that involves the phone 12, the token 14 and the server 18.

In the explained example, it is assumed that the token 14 is coupled to the phone 12, as device which supports an application that needs a service subscription that satisfies the second criterion "criterion 2", as only one requested criterion, that is available at the server 18 side.

According to another embodiment, instead of a phone coupled to the token, the token is connected to a remote server (not represented), as device which supports an application with a need of a service subscription satisfying a requested criterion only available at a remote server.

Optionally, the token 14 authenticates successfully the token user. To authenticate the token user, she/he submits data, like a PIN or biometric data, that is stored within the token memory 144 and deemed as belonging to an authorized user.

Advantageously, the server 18 authenticates successfully the token 14 by using the first authentication key Ki 1 that is associated with the first subscriber IMSI1.

It is assumed that the token 14 has only one active service subscription, for instance, the first service subscription "subscription 1 ".

However, the invention is also applicable when several service subscriptions are simultaneously active.

It is assumed that the phone display screen 122 displays a list of one or several applications offered from the phone 12.

The phone user selects, through the phone 12 MMI, an application that needs second service subscription data that, when used, satisfies a second criterion "criterion 2".

The phone application accesses the second criterion, as requested criterion. The requested criterion may be stored within the phone memory, selected or specified by the phone user through the phone 12 MMI.

The phone 12 (more exactly the phone microprocessor) transmits to the token 14 a message 22 including a request for loading data relating to a second service subscription accompanied with the requested criterion "criterion 2".

Once the requested criterion is received, the token 14 compares the requested criterion "criterion 2" to the stored first criterion "criterion 1 ".

Since the requested criterion does not match the stored first criterion, the token 14 compares the requested criterion "criterion 2" to each of the stored third criterions "criterion 3" and "criterion 4".

After analysis within the token memory 144, the token 14 discovers that the requested criterion "criterion 2" does not match any criterion that is stored within the token memory 144.

It is assumed that the token 14 exchanges, through the phone 12 (not represented), data with the server 18.

Due to a lack of a corresponding stored first criterion, the token 14 sends to the server 18 a message 24, like a Short Message Service (or SMS) message and/or an email, including a request for loading data relating to one (or several service) subscription(s) accompanied with the requested criterion(s), "criterion 2".

Optionally, the token 14 signs data to be sent by using a predetermined signature key stored within the token memory 144.

Optionally, the token 14 encrypts data by using either a public key relating to the server 18 or a shared key stored within the token memory 144 and the server memory 182.

According to another embodiment, the token sends directly, i.e. without any intermediary entity, to a local device that may incorporate a server that accesses a service subscription database including one or several service subscriptions that are associated with the requested criterion(s).

Optionally, the server 18 verifies a signature on the received signed data by using a predetermined signature verification key stored within the server memory 182.

Optionally, the server 18 decrypts the received encrypted data by using either a private key relating to the server 18 or a shared key stored within the token memory 144 and the server memory 182.

Once the requested criterion is received possibly after its decryption, the server 18 compares the requested criterion "criterion 2" to the available second criterion "criterion 2". The available second criterion is either stored within the server memory 182 or accessible to the server 18.

After analysing the database that registers service subscription data with corresponding satisfied criterion(s), the server 18 discovers that the requested criterion does match only the second criterion "criterion 2" that is stored at the server 18 side.

The server 18 identifies and fetches data relating to a second service subscription that is associated with the stored second criterion.

Optionally, the server 18 encrypts the data to be sent to the token 14 by using preferably a shared key stored within the token memory 144 and the server memory 182.

The server 18 sends to the token 14 a message 26, like an SMS message and/or an email, as response to the service subscription data request 24, including data relating to the second service subscription.

Optionally, besides data relating to the identified second service subscription(s), the server 18 sends to the token 14 additional data, like application data, a key(s) for accessing one service(s) a code number or the like, as rights for writing data into the token 14.

Once provisioned by the server 18, the token 14 stores the data relating to the second service subscription.

The second service subscription data is now available at the token 14, as service subscription that is compliant with the requested criterion(s).

The server 18 may send to the token 14 a command (not represented) for deactivating the first service subscription, as the currently active service subscription.

The server 18 may send to the token 14 a command (not represented) for erasing data relating to the first service subscription that is stored within the token memory 144. Thus, the server 18 may use the first service subscription data that becomes available to allocate it subsequently to another token, another device or the same token 14.

The server 18 may send to the token 14 a command (not represented) for activating the second service subscription, as next service subscription to be active.

The token 14 may deactivate the currently active first service subscription.

The token 14 may activate the second service subscription after having received a command for deactivating the currently active first service subscription followed by a command for activating a second service subscription, as lastly loaded second service subscription.

The token 14 may force, at its own initiative, the phone 12 to read from the token 14 the loaded second service subscription data.

The token 14 sends to the phone 12 one or several messages 28 including the second service subscription data.

The phone 12, more exactly at least the original requesting application, reads the second service subscription data.

The invention solution allows adding a service subscription without needing to involve a person of a mobile operator.

The invention solution is flexible since either only the added service subscription is active after having deactivated a previously active service subscription(s) or, besides the added service subscription, (an)other previously active service subscription(s) remain(s) active.

Several service subscriptions may be active simultaneously while a requesting application uses the newly service subscription while the other applications still use the previously active service subscription(s) without having to reconfigure all the applications supported by the phone 12, as requesting device.

The invention solution may be secure while authenticating the token 14 user and/or the token 14, and/or exchanging data in a confidential manner.

The embodiment that has just been described is not intended to limit the scope of the concerned invention. Other embodiments may be given. As another embodiment example, instead of exchanging with a remote server, the token 14 exchanges, over a contact-less radio-frequency link, with a local entity, like a local server.

## Claims

1. A method (20) for accessing a service,
**characterized in that**, a first device (14) storing data relating to at least one first service subscription, the first device storing at least one first criterion associated with each of the at least one first service subscription, a second device (18) storing data relating to at least one second service subscription, the second device storing at least one second criterion associated with each of the at least one second service subscription, the method comprises the following steps:
- the first device compares at least one requested criterion to at least one stored first criterion;
- if the at least one requested criterion does not match the at least one stored first criterion, then the first device sends to a second device a request (24) for loading data relating to at least one service subscription accompanied with the at least one requested criterion;
- the second device compares at least one requested criterion to at least one stored second criterion; and
- if the at least one requested criterion does match the at least one stored second criterion, then the second device sends to the first device data (26) relating to at least one second service subscription associated with the at least one stored second criterion.

2. Method according to claim 1, wherein the method further comprises the following step:
- the second device sends to the first device a command for deactivating a currently active first service subscription and/or a command for activating a loaded second service subscription.

3. Method according to claim 1 or 2, wherein, besides data relating to at least one second service subscription, the second device sends to the first device additional data, the additional data comprising at least one element of a group comprising:
- data relating to at least one key for accessing at least one service;
- data relating to at least one application;
- a command for erasing data relating to at least one first service subscription that is stored within the first device.

4. Method according to claim 1, wherein, if the at least one requested criterion does match the at least one stored first criterion, then the first device deactivates a currently active first service subscription and activates another first service subscription associated with the at least one stored first criterion.

5. Method according to any of claims 1 to 4, wherein data relating to each first or second service subscription includes at least one element of a group comprising:
- a service subscription identifier;
- a network authentication key;
- an authentication algorithm;
- at least one secret;
- a file system;
- at least one applicative key;
- at least one credential.

6. Method according to any of claims 1 to 5, wherein, the second device being connected or coupled to the first device, the second device includes a remote server or a local device.

7. Method according to any of claims 1 to 6, wherein, a third device (12) being connected or coupled to the first device, the third device sends to the first device the at least one requested criterion.

8. A first device (14) for accessing a service,
**characterized in that**, the first device storing data relating to at least one first service subscription, the first device storing at least one first criterion associated with each of the at least one first service subscription, the first device is adapted to:
- compare at least one requested criterion to at least one stored first criterion;
- send to a second device, if the at least one requested criterion does not match the at least one stored first criterion, a request (24) for loading data relating to at least one service subscription accompanied with the at least one requested criterion.

9. A second device (18) for accessing a service,
**characterized in that**, the second device storing data relating to at least one second service subscription, the second device storing at least one second criterion associated with each of the at least one second service subscription, the second device is adapted to:
- receive from a first device a request for loading data relating to at least one service subscription accompanied with at least one requested criterion;
- compare the at least one requested criterion to at least one stored second criterion; and
- send to the first device, if the at least one requested criterion does match the at least one stored second criterion, data relating to at least one second service subscription associated with the at least one stored second criterion.

10. A system (10) for accessing a service,
**characterized in that**, the system comprising at least a first device (14) and a second device (18), the first device storing data relating to at least one first service subscription, the first device storing at least one first criterion associated with each of the at least one first service subscription, the first device is adapted to:
- compare at least one requested criterion to at least one stored first criterion;
- send to a second device, if the at least one requested criterion does not match the at least one stored first criterion, a request (24) for loading data relating to at least one service subscription accompanied with the at least one requested criterion; and
**in that**, the second device storing data relating to at least one second service subscription, the second device storing at least one second criterion associated with each of the at least one second service subscription, the second device is adapted to:
- receive from the first device a request for loading data relating to at least one service subscription accompanied with at least one requested criterion;
- compare the at least one requested criterion to at least one stored second criterion; and
- send to the first device, if the at least one requested criterion does match the at least one stored second criterion, data (26) relating to at least one second service subscription associated with the at least one stored second criterion.
